# EUROPÄISCHE PATENTANMELDUNG

(11) **EP 2 479 630 A1**
(43) Veröffentlichungstag der Anmeldung: **25.07.2012**
(21) Anmeldenummer: 11152004.5
(22) Anmeldetag: 25.01.2011
(51) Int. Cl.: G05B 19/418, G05B 17/02

(54) **Verfahren zur kollisionsfreien Überführung einer Anlage aus einem Scheinausmodus in einen Betriebsmodus**

(71) Anmelder: SIEMENS AKTIENGESELLSCHAFT, 80333 München (DE)
(72) Erfinder: Zwanziger, Peter, 90453, Nürnberg (DE)

(57) **Zusammenfassung**

Verfahren zur kollisionsfreien Überführung einer Anlage aus einem Scheinausmodus in einen Betriebsmodus, wobei die zum kollisionsfreien Anfahren der Anlage erforderlichen Anlagenbetriebszustandsinformationen zusammenhängender Prozessabschnitte zumindest teilweise aus Simulationsdaten eines Echtzeit-Simulationstools abgeleitet werden, das den Anlagenbetrieb parallel zum tatsächlichen Betrieb in Echtzeit simuliert.

## Beschreibung

Die vorliegende Erfindung betrifft ein Verfahren zur kollisionsfreien Überführung einer Anlage aus einem Aus-Modus, insbesondere aus einem Scheinausmodus, in einen Betriebsmodus.

Anlagen, wie beispielsweise automatisierte
Produktionsanlagen, können normalerweise aus einem Betriebsmodus in einen Scheinausmodus versetzt werden, der auch als Standbymodus bezeichnet wird. Ein solcher Scheinausmodus zeichnet sich dadurch aus, dass er im Vergleich zum Betriebsmodus nur sehr wenig Energie benötigt, was in Bezug auf die Umwelt und die Betriebskosten grundsätzlich wünschenswert ist. Ein Problem besteht allerdings dahingehend, dass bei der Überführung der Anlage aus dem Scheinausmodus zurück in den Betriebsmodus sämtliche relevanten Betriebszustände entsprechend der Anlagenfunktion zur Sicherstellung eines kollisionsfreien Anfahrens der Anlage auf den jeweils gleichen Wissensstand vor dem Scheinausmodus gebracht werden müssen, was sowohl die dynamischen als auch die statischen Zustände zusammenhängender Prozessabschnitte und deren zeitlichen Kausalitäten betrifft. Dies ist mit einem hohen Aufwand verbunden. Insbesondere die zeitlichen Kausalitäten, wie beispielsweise das zeitliche Zusammenspiel einzelner Prozessabschnitte oder dergleichen, gehen beim Übergang der Anlage vom Betriebsmodus in den Scheinausmodus verloren, weshalb die Anlage neu angefahren werden muss. Entsprechend wird die Stromeinsparmöglichkeit während Stillstandszeiten von Anlagen durch Überführen der Anlage in den Scheinausmodus meist nicht genutzt.

Das kollisionsfreie Überführen einer Anlage aus einem vollständigen Aus-Modus in einen Betriebsmodus ist mit noch größerem zeitlichem Aufwand verbunden. Meist müssen die einzelnen Anlagenkomponenten, die den zusammenhängenden Prozessabschnitten zugeordnet sind, erst in eine vordefinierte Ausgangsstellung gebracht werden, um ausgehend von dieser Ausgangsstellung den Betriebsmodus einzuleiten.

Ausgehend von diesem Stand der Technik ist es eine Aufgabe der vorliegenden Erfindung, ein Verfahren der eingangs genannten Art zu schaffen, das eine schnelle kollisionsfreie Überführung einer Anlage aus einem Aus-Modus, insbesondere aus einem Scheinausmodus in einen Betriebsmodus sicherstellt.

Zur Lösung dieser Aufgabe schafft die vorliegende Erfindung ein Verfahren der eingangs genannten Art, dass dadurch gekennzeichnet ist, dass die zum kollisionsfreien Anfahren der Anlage erforderlichen Anlagenbetriebszustandsinformationen zusammenhängender Prozessabschnitte, bei denen es sich um Haupt- und/oder Nebenprozesse handeln kann, aus Simulationsdaten eines Echtzeit-Simulationstools abgeleitet werden, das den Anlagenbetrieb parallel zum tatsächlichen Betrieb in Echtzeit simuliert.

Die Nutzung eines solchen Echtzeit-Simulationstools ist dahingehend vorteilhaft, dass anhand der Simulationsdaten stets die aktuellen dynamischen und statischen Zustände zusammenhängender Anlagenprozessabschnitte und deren zeitlichen Kausalitäten bekannt sind, also auch diejenigen Zustände kurz vor Überführung der Anlage aus dem Betriebsmodus in den Aus-Modus, was ein kollisionsfreies Anfahren der Anlage ermöglicht. Die Anlage kann den Prozess dort aufnehmen, wo er unterbrochen wurde, oder zumindest kurz davor. Ferner kann die Überführung einer Anlage aus einem Scheinausmodus in einen Betriebsmodus Dank der vorhandenen und schnell abrufbaren Simulationsdaten innerhalb einer sehr kurzen Zeitdauer erfolgen, wodurch insbesondere Kosten eingespart werden können. Bei dem zum kollisionsfreien Anfahren der Anlage erforderlichen Anlagenbetriebszustandsinformationen zusammenhängender Prozessabschnitte kann es sich beispielsweise um die Position aller halbfertigen Werkstücke in der Anlage vor dem Übergang aus dem Betriebsmodus in den Aus-Modus, und/oder um Informationen, welche Arbeitsgänge beim Übergang unterbrochen wurden, beispielsweise alle Daten des letzten Programmschrittes einer Bearbeitungsmaschine, und/oder um Informationen, wie oder an welcher Stelle die unterbrochenen Arbeitsgänge wieder aufgenommen werden können, und/oder um Informationen der Betriebstemperaturen der Bearbeitungsmaschinen und/oder der Temperaturen der halbfertigen Werkstücke, die vor der erneuten Inbetriebnahme wieder eingestellt werden müssen, oder dergleichen handeln.

Gemäß einer Ausgestaltung der vorliegenden Erfindung weist das Verfahren die Schritte auf: Simulieren des Betriebs der Anlage in Echtzeit unter Verwendung des Simulationstools auf der Basis von Simulationsdaten, die aus Anlagenbetriebszustandsinformationen generiert werden, die in Echtzeit von der Anlage an das Simulationstool übermittelt wurden; Überführung der Anlage in den Scheinausmodus; Ableiten der zum kollisionsfreien Anfahren der Anlage erforderlichen Anlagenbetriebszustandsinformationen aus Simulationsdaten unter Verwendung des Simulationstools und Speichern dieser Informationen im Simulationstool als Wiederanfahrinformationen; Übermitteln der Wiederanfahrinformationen von dem Simulationstool an die Anlage, insbesondere im Rahmen einer Synchronisation von Simulationstool und Anlage; und Überführen der Anlage aus dem Scheinausmodus in den Betriebsmodus unter Verwendung der übermittelten Wiederanfahrinformationen.

Bei dem Simulationstool kann es sich beispielsweise um ein solches handeln, dass auf einem Konzept der "digitalen Fabrik" basiert. Eine digitale Fabrik stellt ein virtuelles Abbild einer realen Anlage oder Fabrik dar und dient dazu, Produktionsprozesse zu simulieren und Arbeitsabläufe zu optimieren. Das Konzept der digitalen Fabrik wird sowohl als Basis für die Planung einer realen Produktion und somit vor der Inbetriebnahme einer Produktion als auch während der Produktion zur Prozessoptimierung eingesetzt.

Gemäß einer weiteren Ausgestaltung der vorliegenden Erfindung weist das Verfahren die Schritte auf: Simulieren des Betriebs der Anlage in Echtzeit unter Verwendung der Simulationstools, wobei die Simulation auf der Basis von Simulationsdaten durchgeführt wird, die aus Anlagenbetriebszustandsinformationen generiert werden, die in Echtzeit von der Anlage an das Simulationstool übermittelt werden; Ableiten von zum kollisionsfreien Anfahren der Anlage erforderlichen Anlagenbetriebsinformationen aus Simulationsdaten unter Verwendung des Simulationstools in regelmäßigen zeitlichen Abständen und Speichern dieser Informationen im Simulationstool als Wiederanfahrinformationen; Überführen der Anlage in einen Aus-Modus; Übermitteln der Wiederanfahrinformationen von dem Simulationstool an die Anlage, insbesondere im Rahmen einer Synchronisation von Simulationstool und Anlage, beim erneuten Einschalten der Anlage; und Überführen der Anlage aus dem Aus-Modus in den Betriebsmodus unter Verwendung der übermittelten Wiederanfahrinformationen; wobei die Anlage und das Simulationstool über getrennte Energieversorgungen gespeist werden.

Während sich eine Anlage vor der Überführung von einem Betriebsmodus in einen Scheinausmodus auf den Scheinausmodus vorbereiten lässt, ist dies beim vollständigen Abschalten einer Anlage nicht immer möglich, wie beispielsweise bei Betätigung einer Not-Aus-Einrichtung der Anlage. Um dennoch die Möglichkeit zu haben, die Anlage bzw. die einzelnen Prozessabschnitte genau in demjenigen Zustand wieder in Betrieb zu nehmen, in dem sie zuvor abgeschaltet wurden, werden bei dieser Variante des erfindungsgemäßen Verfahrens die zum kollisionsfreien Anfahren der Anlage erforderlichen Anlagenbetriebsinformationen in regelmäßigen zeitlichen Abständen aus Simulationsdaten unter Verwendung des Simulationstools abgeleitet und als Wiederanfahrinformation gespeichert. Nach dem vollständigen Ausschalten der Anlage kann somit beispielsweise der zuletzt gespeicherte Wiederanfahrinformationssatz zur erneuten Inbetriebnahme der Anlage bzw. der einzelnen Prozessabschnitte verwendet werden, wodurch sich Zeit und Kosten einsparen lassen.

Vorteilhaft überwacht ein Überwachungssystem
Zustandsänderungen der Anlage während des Aus-Modus und meldet solche Zustandsänderungen an das Simulationstool, wobei das Überwachungssystem und die Anlage über getrennte Energieversorgungen gespeist werden. Unter Verwendung eines solchen Überwachungssystems kann sichergestellt werden, dass der Zustand der Anlage, während sich diese im Aus-Modus befindet, nicht verändert wird, beispielsweise durch Entnahme von Werkstücken oder dergleichen, was ein Problem bei der erneuten Inbetriebnahme der Anlage darstellen könnte.

Weitere Merkmale und Vorteile werden anhand der nachfolgenden Beschreibung von Verfahren zur kollisionsfreien Überführung einer Anlage aus einem Scheinausmodus in einen Betriebsmodus gemäß Ausführungsformen der vorliegenden Erfindung unter Bezugnahme auf die beiliegende Zeichnung deutlich. Darin zeigt
- Figur 1: ein Ablaufdiagramm eines Verfahrens gemäß einer ersten Ausführungsform der vorliegenden Erfindung; und
- Figur 2: ein Ablaufdiagramm eines Verfahrens gemäß einer zweiten Ausführungsform der vorliegenden Erfindung.

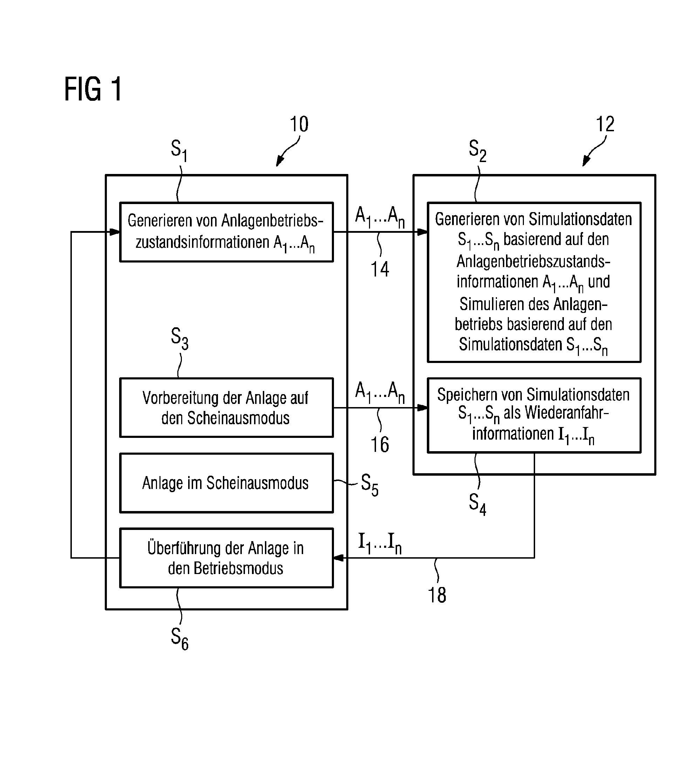

Figur 1 zeigt schematisch eine Produktionsanlage 10, die mithilfe des erfindungsgemäßen Verfahrens kollisionsfrei aus einem Scheinausmodus in einen Betriebsmodus überführt werden kann, und ein Simulationstool 12, das parallel dazu den Betrieb der Anlage 10 in Echtzeit simuliert.

Im Betriebsmodus werden in einem Schritt S1 von der Anlage 10 kontinuierlich Anlagenbetriebszustandsinformationen A₁ ... Aₙ generiert, welche die dynamischen und statischen Zustände zusammenhängender Prozessabschnitte repräsentieren. Bei den Prozessabschnitten handelt es sich um Haupt- und Nebenprozesse. Die Hauptprozesse sind im Wesentlichen die eigentlichen Bearbeitungsprozesse eines Werkstücks, wohingegen die Nebenprozesse beispielsweise Förderprozesse, Klimatisierungsprozesse oder dergleichen einschließen, die neben den Bearbeitungsprozessen zur Erzielung einer ordnungsgemäßen Produktion erforderlich sind. Die Anlagenbetriebszustandsinformationen werden in Echtzeit an das Simulationstool 12 übermittelt, was durch den Pfeil 14 dargestellt ist. Anhand der übermittelten Anlagenbetriebszustandsinformationen werden in einem Schritt S2 im Simulationstool 12 Simulationsdaten S₁ ... Sₙ generiert, anhand derer der Betrieb der Anlage 10 in Echtzeit simuliert wird. Entsprechend ist dem Simulationstool 12 zu jedem Zeitpunkt der aktuelle Betriebszustand der Anlage 10 in Bezug auf die erforderlichen dynamischen und statischen Zustände der zusammenhängenden Prozessabschnitte und deren zeitlichen Kausalitäten bekannt.

Soll die Anlage 10 aus dem Betriebsmodus in einen Scheinausmodus überführt werden, so wird die Anlage 10 in einem Schritt S3 für den Scheinausmodus vorbereitet. Dabei werden die Anlagenbetriebszustandsinformationen zum Zeitpunkt der Überführung der Anlage 10 aus dem Betriebsmodus in den Scheinausmodus A₁ ... Aₙ zugeordnet und an das Simulationstool 12 übermittelt, was durch den Pfeil 16 dargestellt ist. In einem Schritt S4 werden dann basierend auf den übermittelten Anlagenbetriebszustandsinformationen A₁ ... Aₙ Simulationsdaten S₁ ... Sₙ generiert, die als sichere Wiederanfahrinformationen I₁ ... Iₙ dienen und in dem Simulationstool 12 zusammen mit deren zeitlichen Kausalitäten gespeichert werden. Daraufhin geht die Anlage 10 im Schritt S5 in den Scheinausmodus über. Während sich die Anlage 10 im Scheinausmodus befindet, werden keine Anlagenbetriebszustandsinformationen A₁ ... Aₙ an das Simulationstool 12 übermittelt, da sich die dynamischen und statischen Zustände der zusammenhängenden Prozessabschnitte ebenso wie deren zeitlichen Kausalitäten nicht ändern. Die Wiederanfahrinformationen I₁ ... Iₙ werden während des Scheinausmodus durch das Simulationstool 12 gesichert.

Soll nunmehr die Anlage 10 in einem Schritt S6 aus dem Scheinausmodus wieder in den Betriebsmodus überführt werden, so werden die in dem Simulationstool 12 gespeicherten Wiederanfahrinformationen I₁ ... Iₙ im Rahmen einer Synchronisation an die Anlage 10 übermittelt, was durch den Pfeil 18 dargestellt ist. Entsprechend wird die Anlage 10 innerhalb kurzer Zeitdauer in Bezug auf die dynamischen und statischen Zustände der zusammenhängenden Prozessabschnitte und deren zeitlichen Kausalitäten wieder auf den Wissensstand vor der Überführung der Anlage 10 aus dem Betriebsmodus in den Scheinausmodus entsprechend Schritt S3 gebracht. Die Anlage 10 kann daraufhin wieder schnell und kollisionsfrei anfahren und zum Schritt S1 zurückkehren.

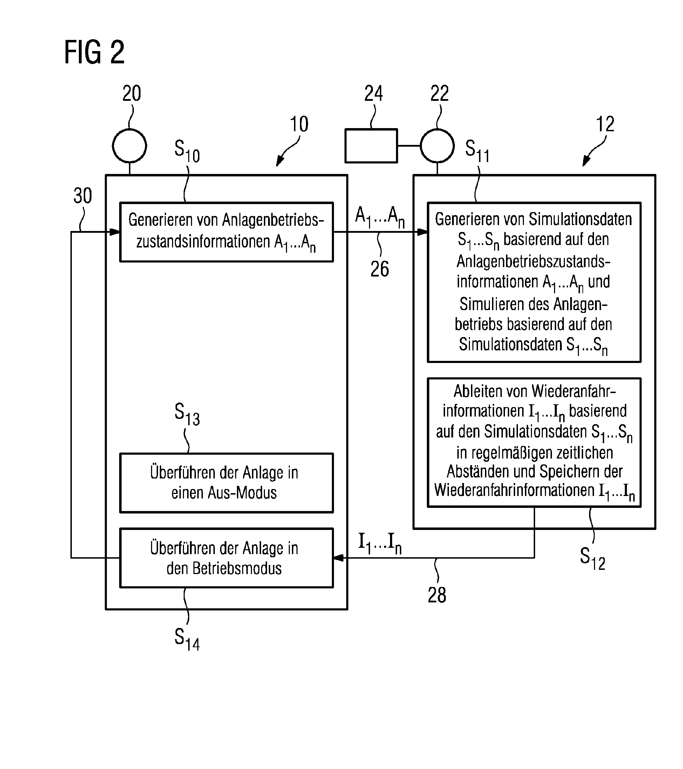

Figur 2 zeigt schematisch eine Produktionsanlage 10, die mit Hilfe des erfindungsgemäßen Verfahrens kollisionsfrei aus einem Aus-Modus in einen Betriebsmodus überführt werden kann, und ein Simulationstool 12, das parallel dazu den Betrieb in der Anlage 10 in Echtzeit simuliert. Die Anlage 10 wird dabei über eine Energiequelle 20 gespeist, und das Simulationstool 12 wird über eine separate Energiequelle 22 versorgt, an die auch ein Überwachungssystem 24 angeschlossen ist.

Im Betriebsmodus werden in einem Schritt S10, wie es zuvor bereits unter Bezugnahme auf Figur 1 beschrieben wurde, von der Anlage 10 kontinuierlich Anlagenbetriebszustandsinformationen A₁ ...Aₙ generiert, welche die dynamischen und statischen Zustände zusammenhängender Prozesse repräsentieren. Die Anlagenbetriebszustandsinformationen werden in Echtzeit an das Simulationstool 12 übermittelt, was durch den Pfeil 26 dargestellt ist. Anhand der übermittelten Anlagenbetriebszustandsinformationen werden in einem Schritt S11 im Simulationstool 12 Simulationsdaten S₁ ... Sₙ generiert, anhand derer der Betrieb der Anlage 10 in Echtzeit simuliert wird. Entsprechend ist dem Simulationstool 12 zu jedem Zeitpunkt der aktuelle Betriebszustand der Anlage 10 in Bezug auf die dynamischen und statischen Zustände der zusammenhängenden Prozessabschnitte und deren zeitlichen Kausalitäten bekannt. Bei den Prozessabschnitten handelt es sich auch hier um Hauptprozesse sowie um Nebenprozesse.

In einem Schritt S12 werden im Simulationstool 12 während des Betriebs der Anlage 10 Wiederanfahrinformationen I₁ ... Iₙ basierend auf den Simulationsdaten S₁ ... Sₙ in regelmäßigen zeitlichen Abständen abgeleitet und als Wiederanfahrinformationen I₁ ... Iₙ im Simulationstool 12 gespeichert. Wird nun in einem Schritt S13 die Anlage 10 in einen Aus-Modus überführt, beispielsweise durch Betätigen eines Aus-Schalters oder einer Not-Aus-Einrichtung, so geht die Anlage 10 in den Aus-Modus über. Während sich die Anlage 10 im Aus-Modus befindet, werden keine Anlagenbetriebszustandsinformationen A₁ ... Aₙ an das Simulationstool 12 übermittelt, da sich die dynamischen und statischen Zustände der zusammenhängenden Prozessabschnitte ebenso wie deren zeitlichen Kausalitäten nicht ändern.

Soll nunmehr die Anlage 10 in einem Schritt S14 aus dem Aus-Modus wieder in den Betriebsmodus überführt werden, so werden die im Simulationstool 12 gespeicherten Wiederanfahrinformationen I₁ ... Iₙ im Rahmen einer Synchronisation an die Anlage 10 übermittelt, was durch den Pfeil 28 dargestellt ist. Bei den Wiederanfahrinformationen I₁ ... Iₙ handelt es sich vorliegend um diejenigen Wiederanfahrinformationen, die als letztes im Schritt S12 abgeleitet und gespeichert wurden. Entsprechend wird die Anlage 10 innerhalb kurzer Zeitdauer in Bezug auf die dynamischen und statischen Zustände der zusammenhängenden Prozessabschnitte und deren zeitlichen Kausalitäten wieder auf den Wissenstand vor der Überführung der Anlage 10 aus dem Betriebsmodus in den Aus-Modus entsprechend Schritt 13 gebracht. Die Anlage 10 kann daraufhin wieder schnell und kollisionsfrei anfahren und zum Schritt S10 zurückkehren, wie es durch den Pfeil 30 angedeutet ist.

Während sich die Anlage 10 im Aus-Modus befindet, überwacht das Überwachungssystem 24 Zustandsänderungen der Anlage 10. Hierzu kann das Überwachungssystem 24 beispielsweise Kameras, Sensoren oder dergleichen aufweisen. Wird von dem Überwachungssystem 24 eine Zustandsänderung der Anlage 10 detektiert, beispielsweise das Entfernen eines Werkstückes oder dergleichen, so wird diese Zustandsänderung an das Simulationstool 12 gemeldet, da die Zustandsänderung ein Problem bei der erneuten Überführung der Anlage 10 in den Betriebsmodus in Schritt S14 dargestellten kann. Die Zustandsänderung wird im Simulationstool 12 bewertet. Sollte diese ein Problem darstellten, so können entsprechende Gegenmaßnahmen getroffen werden, beispielsweise in Form der Ausgabe einer Fehlermeldung oder dergleichen.

## Patentansprüche

1. Verfahren zur kollisionsfreien Überführung einer Anlage aus einem Aus-Modus, insbesondere einem Scheinausmodus, in einen Betriebsmodus,
**dadurch gekennzeichnet, dass**
die zum kollisionsfreien Anfahren der Anlage erforderlichen Anlagenbetriebszustandsinformationen zusammenhängender Prozessabschnitte aus Simulationsdaten eines Echtzeit-Simulationstools abgeleitet werden, das den Anlagenbetrieb parallel zum tatsächlichen Betrieb in Echtzeit simuliert.

2. Verfahren nach Anspruch 1, das die Schritte aufweist:
- Simulieren des Betriebs der Anlage in Echtzeit unter Verwendung des Simulationstools, wobei die Simulation auf der Basis von Simulationsdaten durchgeführt wird, die aus Anlagenbetriebszustandsinformationen generiert wurden, die in Echtzeit von der Anlage an das Simulationstool übermittelt werden;
- Überführung der Anlage in den Scheinausmodus;
- Ableiten der zum kollisionsfreien Anfahren der Anlage erforderlichen Anlagenbetriebszustandsinformationen aus Simulationsdaten unter Verwendung des Simulationstools und Speichern dieser Informationen im Simulationstool als Wiederanfahrinformationen;
- Übermitteln der Wiederanfahrinformationen von dem Simulationstool an die Anlage, insbesondere im Rahmen einer Synchronisation von Simulationstool und Anlage; und
- Überführen der Anlage aus dem Scheinausmodus in den Betriebsmodus unter Verwendung der übermittelten Wiederanfahrinformationen.

3. Verfahren nach einem der vorhergehenden Ansprüche, **dadurch gekennzeichnet, dass**
das Simulationstool auf einem Konzept der digitalen Fabrik basiert.

4. Verfahren nach einem der vorhergehenden Ansprüche, das die Schritte aufweist:
- Simulieren des Betriebs der Anlage in Echtzeit unter Verwendung des Simulationstools, wobei die Simulation auf der Basis von Simulationsdaten durchgeführt wird, die aus Anlagenbetriebszustandsinformationen generiert wurden, die in Echtzeit von der Anlage an das Simulationstool übermittelt werden;
- Ableiten von zum kollisionsfreien Anfahren der Anlage erforderlichen Anlagenbetriebsinformationen aus Simulationsdaten unter Verwendung des Simulationstools in regelmäßigen zeitlichen Abständen und Speichern dieser Informationen im Simulationstool als Wiederanfahrinformationen;
- Überführen der Anlage in einen Aus-Modus;
- Übermitteln der Wiederanfahrinformationen von dem Simulationstool an die Anlage, insbesondere im Rahmen einer Synchronisation von Simulationstool und Anlage, beim erneuten Einschalten der Anlage; und
- Überführen der Anlage aus dem Aus-Modus in den Betriebsmodus unter Verwendung der übermittelten Wiederanfahrinformationen;
wobei die Anlage und das Simulationstool über getrennte Energieversorgungen gespeist werden.

5. Verfahren nach einem der vorhergehenden Ansprüche, **dadurch gekennzeichnet, dass**
ein Überwachungssystem Zustandsänderungen der Anlage während des Aus-Modus überwacht und an das Simulationstool meldet, wobei das Überwachungssystem und die Anlage über getrennte Energieversorgungen gespeist werden.
